(19) Europäisches Patentamt / European Patent Office / Office européen des brevets

(11) **EP 1 759 934 A1**

(12) **DEMANDE DE BREVET EUROPEEN**

(43) Date de publication:
**07.03.2007 Bulletin 2007/10**

(51) Int Cl.:
***B60R 21/015*** *(2006.01)*

(21) Numéro de dépôt: **06300080.6**

(22) Date de dépôt: **30.01.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **31.08.2005 FR 0552620**

(71) Demandeur: **Peugeot Citroen Automobiles SA 78140 Vélizy-Villacoublay (FR)**

(72) Inventeurs:
• **Periot, Stéphanie**
**75014 Paris (FR)**
• **Poinsignon, Jean-Marc**
**57220 Fouligny (FR)**
• **Hintzy, Julien**
**25550 Présentevillers (FR)**

(74) Mandataire: **Fernandez, Francis Lionel PSA Peugeot Citroen, Service Propriété Industrielle, DINQ/DRIA/PPIQ/VPI, Route de Gisy, Centre Technique de Vélizy 78943 Vélizy Villacoublay Cedex (FR)**

(54) **Procédé et dispositif de détection et de classification d'occupant sur un siège de véhicule**

(57) Le siège présente au moins un réglage de déplacement commandé par au moins un actionneur.

Le procédé comporte les étapes suivantes :
- a) on commande (400) ledit actionneur permettant le déplacement dudit siège en augmentant progressivement dans le temps la puissance fournie (PA) audit actionneur selon un profil prédéterminé,
- b) on détecte le démarrage ($D_M$) du mouvement de l'actionneur de déplacement, et à cet instant on relève la valeur atteinte par ladite puissance,
- c) on compare ladite valeur de puissance relevée à une série de valeurs de référence prédéterminées, afin de déterminer la présence d'un occupant du siège (1) et de le classifier selon sa masse.
- Systèmes de sécurité, de confort, de vision des véhicules automobiles.

FIG.6

## Description

La présente invention concerne un procédé et un dispositif de détection et de classification d'occupant sur un siège de véhicule, en particulier de véhicule automobile. Le procédé et le dispositif de l'invention se rapportent d'une part à la détection de l'existence d'un occupant sur un siège de véhicule, mais aussi à la classification de l'occupant d'un siège occupé selon son poids, à savoir si l'occupant est un enfant ou un adulte et dans quelle fourchette de poids se situe l'adulte.

On connaît, selon le brevet PCT n° WO 98/41424, un dispositif pour commander la mise en place d'un système d'airbag dans un véhicule automobile. Le siège passager du véhicule comporte un châssis et un réseau cordé fixé au châssis pour supporter le poids d'un occupant sur le siège. Le dispositif comprend un capteur couplé à une partie du réseau pour mesurer une contrainte de traction exercée sur le réseau par le poids de l'occupant sur le siège et pour envoyer un signal représentatif de cette contrainte. Il y a également un calculateur connecté à la sortie du capteur qui produit un signal de commande de déploiement de l'airbag lorsque la contrainte de traction atteint une valeur de seuil prédéterminée.

Il est connu également d'utiliser des nappes de pression intégrées à la garniture intérieure des sièges pour détecter la présence d'un passager. Chacun des capteurs modifie sa résistance électrique en fonction de la pression qu'il subit. Ces données permettent ensuite à un système d'évaluation de calculer un profil de la pression en corrigeant automatiquement les effets du mouvement du véhicule et du changement de position de la personne assise sur le siège.

De tels systèmes connus de l'art antérieur impliquent des contraintes d'intégration importantes (confort, design, etc.) et un surcoût sur le véhicule. De plus, ces systèmes ne permettent pas de différencier divers types d'occupation et donc de classifier l'occupant selon diverses catégories.

Un premier but de la présente invention est de concevoir un procédé et un dispositif de détection et de classification d'occupant de siège de véhicule, qui permette de supprimer les nappes de détection actuelles sans ajouter de capteur de poids.

Un second but de la présente invention est de concevoir un procédé et un dispositif de détection et de classification d'occupant de siège qui permette, par exemple, d'adapter les stratégies de déploiement des moyens de retenue en cas d'accident sans influer sur la prestation confort du passager. On notera que d'autres applications liées à la masse de l'occupant sont visées, en particulier les applications de la reconnaissance d'occupant pour le réglage confort, parmi lesquelles, à titre d'exemples, la reconnaissance d'occupant pour le réglage siège, pour la fonction massage ou climatisation, la modification de l'assiette du véhicule et le réglage des feux ou amortisseurs selon la masse des occupants, le diagnostic mécanique selon la cinématique relevée (autodiagnostic du siège selon l'usure) etc.

Un autre but de la présente invention est de réaliser un tel dispositif qui soit fiable et peu coûteux.

Pour atteindre ces buts, la présente invention met en oeuvre un nouveau procédé de détection et de classification d'occupant d'un siège de véhicule, lequel siège présentant au moins un réglage de déplacement commandé par au moins un actionneur de déplacement. Ce nouveau procédé comporte les étapes suivantes :

- a) on commande ledit actionneur permettant le déplacement dudit siège en augmentant progressivement dans le temps la puissance fournie audit actionneur selon un profil prédéterminé,

- b) on détecte le démarrage du mouvement de l'actionneur de déplacement, et à cet instant on relève la valeur atteinte par ladite puissance,

- c) on compare ladite valeur de puissance relevée à une série de valeurs de référence prédéterminées, afin de déterminer la présence d'un occupant du siège et de le classifier selon sa masse.

On notera que l'actionneur peut être un actionneur électrique, par exemple un moteur, rotatif ou linéaire, ou encore un actionneur pneumatique ou analogue.

De préférence, ladite augmentation est réalisée par un moyen de contrôle de puissance.

De préférence également, ladite augmentation est opérée selon un profil de type linéaire.

De manière préférentielle également, ladite augmentation évolue selon un profil adapté tenant compte de mesure(s) antérieure(s).

Selon un mode de réalisation particulier de l'invention, la caractéristique variable est le rapport cyclique d'une tension hachée, mais toute autre méthode connue en soi de variation de puissance fournie à l'actionneur peut être appliquée.

Selon un mode de réalisation préféré de l'invention, préalablement aux étapes a) à c) dudit procédé, il est effectué une action suffisante pour rattraper les jeux mécaniques du siège ou bien, en variante, il est effectué une action permettant de ne pas prendre en compte les jeux mécaniques dans la mesure.

Selon le mode préféré de réalisation de l'invention également, le procédé est répété de manière périodique et/ou évènementielle dans le but de connaître à chaque instant l'existence d'un occupant et sa classification.

Le procédé selon l'invention s'applique mutatis mutandis à la détection et à la classification selon sa masse d'un objet sur le siège de véhicule, en lieu et place d'un occupant.

Selon un mode préféré de réalisation de l'invention, il est effectué, après l'étape c), une action inverse dudit actionneur afin d'annuler les modifications de réglage dudit siège.

Ledit réglage de déplacement commandé par au moins un actionneur de déplacement peut être un réglage de déplacement en translation du siège, ou un réglage de déplacement en révolution du siège, ou une composante des deux.

De manière préférentielle, les étapes a) à c) sont réalisées lorsque aucune commande du siège n'est activée, de manière à ne pas perturber la mesure et laisser à l'occupant la priorité d'utilisation.

Pour atteindre les buts précédemment cités, et la mise du procédé défini ci-dessus, la présente invention réalise un nouveau dispositif de détection et de classification d'occupant (ou d'objet) sur un siège de véhicule, lequel siège présente au moins un réglage de déplacement commandé par au moins un actionneur de déplacement. Ce nouveau dispositif comprend :

- a) un moyen pour appliquer audit actionneur de déplacement dudit siège un profil de puissance préalablement défini, ladite puissance présentant au moins une caractéristique représentative de l'effort appliqué sur l'actionneur.

- b) un moyen de détection du mouvement dudit actionneur de siège,

- c) un moyen de comparaison de ladite valeur de la puissance définie au moment du mouvement dudit actionneur avec une série de valeurs de référence prédéterminées de ladite puissance, afin de déterminer la présence d'un occupant (ou d'un objet) sur le siège et de le classifier selon sa masse.

De préférence, ledit moyen pour appliquer audit actionneur de déplacement dudit siège un profil de puissance préalablement défini est un moyen de contrôle de la puissance fournie audit actionneur.

De préférence également, ledit moyen pour appliquer audit actionneur de déplacement dudit siège un profil de puissance préalablement défini est un calculateur embarqué sur le véhicule.

Selon un mode de réalisation préféré de l'invention, ledit calculateur est le moyen de détection du mouvement dudit actionneur de siège, et est aussi le moyen de comparaison de ladite valeur de la caractéristique mesurée au moment du démarrage dudit actionneur avec une série de valeurs de référence prédéterminées de ladite caractéristique.

Egalement selon un mode de réalisation préféré de l'invention, l'actionneur est un moteur électrique, de préférence un moteur électrique rotatif.

D'autres avantages et caractéristiques de l'invention apparaîtront dans la description qui suit d'un mode de réalisation préféré, non limitatif de l'objet et de la portée de la présente demande de brevet, accompagnée de dessins dans lesquels :

- la figure 1 est une vue schématique d'un siège de véhicule,

- la figure 2 est un exemple de graphe représentant un profil de commande des actionneurs de réglage du siège, selon l'invention,

- la figure 3 représente une tension hachée,

- la figure 4 est un graphe des mesures de la puissance permettant le démarrage de l'actionneur en fonction de la masse appliquée, pour la détermination des seuils de classification,

- la figure 5 est un algorithme général du principe de mesure selon l'invention,

- la figure 6 est un algorithme de la mesure proprement dite selon l'invention,

Un mode de réalisation préféré de la présente invention est décrit ci-après.

Au préalable, il a été défini, de manière connue en soi, des classes d'occupant de siège en fonction du poids. Les seuils de cette classification répondent au tableau suivant :

| Masse (en kg) | 0 à 5 | 5 à 37 | 37 à 63 | 63 à 86 | > de 86 |
|---|---|---|---|---|---|
| Classe ou S/Groupe | Siège Vide | Enfant dans DRE ou Rehausseur | 5ième centile | 50ième centile | 95ième centile |

Un centile correspond au pourcentage d'individus qui ont une masse inférieure à une masse donnée. Ainsi, 95 % des individus ont une masse inférieure à 86 kg. Selon les seuils ci-dessus, le siège est considéré vide pour une masse allant de 0 à 5kg. Le siège est considéré occupé par un enfant ou un enfant dans un DRE (Dispositif de Retenue pour Enfant) ou dans un rehausseur.

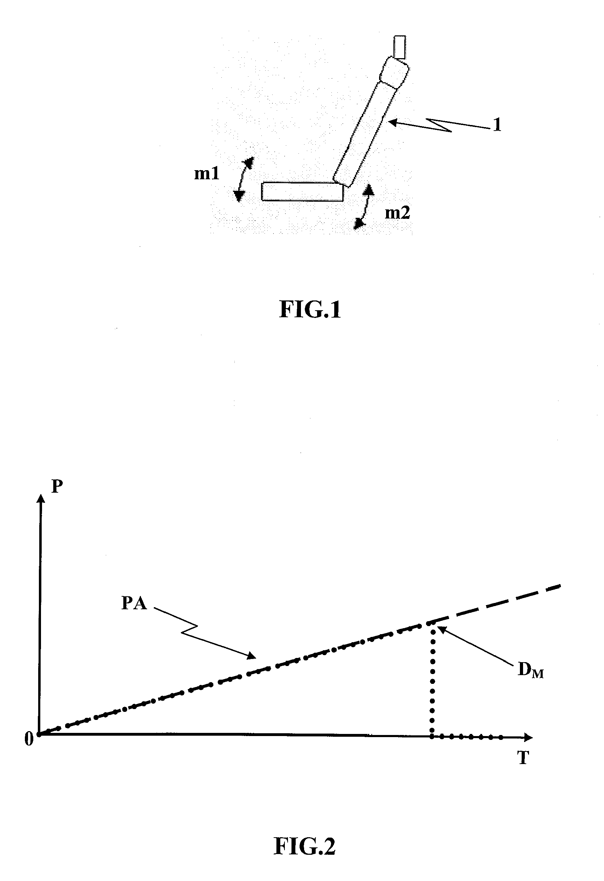

Sur la figure 1 est schématiquement représenté un siège 1, pouvant par exemple être réglé selon un mouvement de déplacement vertical m1 ou un mouvement vertical du rehausseur m2.

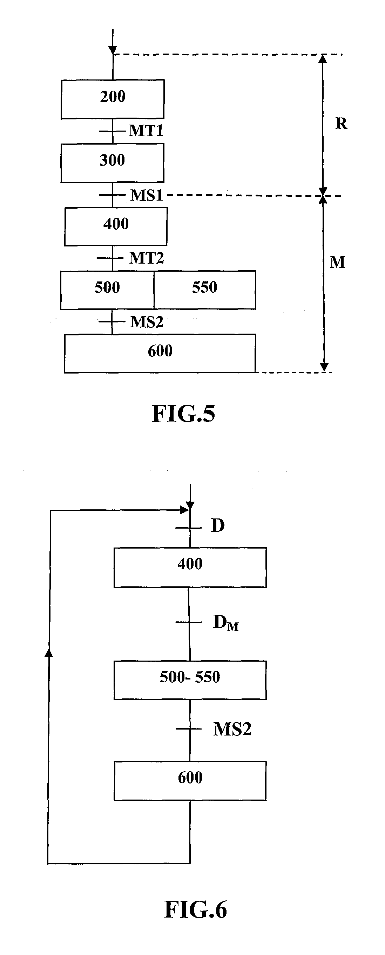

L'opération de détection et de classification d'occupant du siège 1, comporte deux temps différents : un premier temps R au cours duquel on effectue une récupération des jeux mécaniques du siège 1, et un second temps M au cours duquel on effectue la mesure proprement dite (voir figure 5).

Pour effectuer la mesure proprement dite, on alimente le (ou les) actionneur(s) de réglage vertical du siège 1 par un profil de puissance PA (figure 2) défini par un calculateur électronique non représenté, dans laquelle T est le temps et P la puissance fournie à l'actionneur.

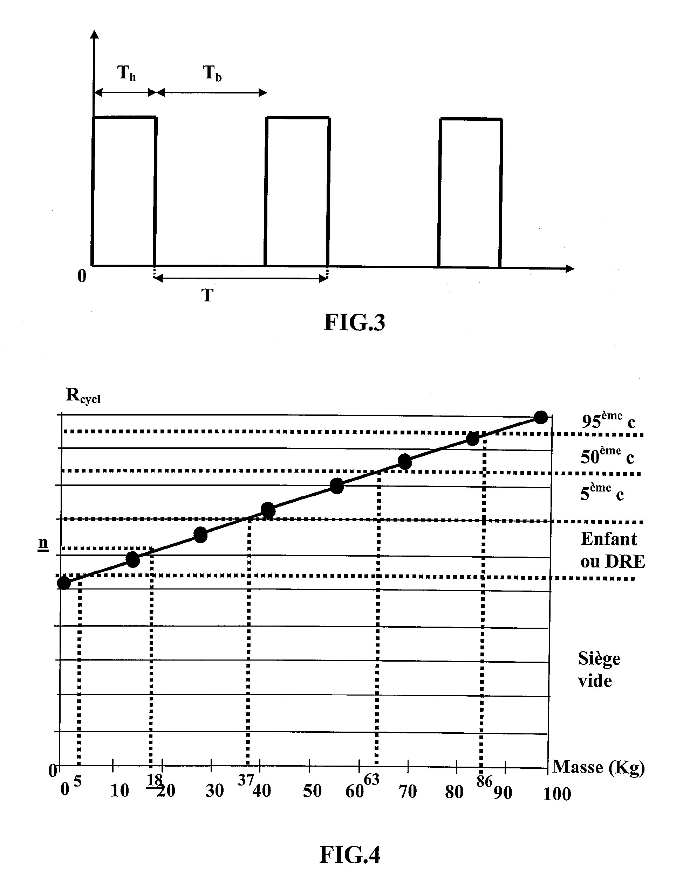

La consigne envoyée par le calculateur est une tension hachée. On notera que toute autre méthode de variation de puissance fournie à l'actionneur est applicable. Comme son nom l'indique, la tension est découpée en une suite de rectangles périodiques (voir figure 3). Ces rectangles sont espacés d'une période appelée T. Chaque période T se décompose en deux parties : un temps à l'état haut Th et un temps à l'état bas Tb. Le rapport cyclique $R_{CYC}$ est le rapport entre le temps à l'état haut Th et la période, par conséquent :

$$R_{CYC} = Th/T = Th/(Th + Tb)$$

On a un rapport cyclique toujours inférieur à 1, qui s'exprime par 0,5 si Th =Tb ou encore par 50 %.

De manière connue en soi, le courant haché est lissé par la bobine de l'actionneur. On obtient un courant moyen dont la valeur dépend du rapport cyclique. La variation du rapport cyclique $R_{CYC}$ va donc influer sur le courant moyen lissé.

Dès que l'on détecte le démarrage de l'actionneur (point $D_M$ sur la figure 2), on relève le rapport cyclique appliqué à cet instant précis $R_{CYC}$ (Dem) et on définit la classe ou sous groupe de l'occupant selon les seuils prédéfinis, tels que l'on peut le voir sur le graphe de la figure 4, qui lie les valeurs de rapport cyclique de démarrage de l'actionneur relevées à la masse appliquée. Le graphe de la figure 4 est obtenu par des mesures préalables et les seuils de classification obtenus sont intégrés dans le calculateur électronique.

Le procédé selon l'invention peut être décrit également par l'algorithme représenté sur le dessin de la figure 5.

On effectue au préalable une récupération des jeux mécaniques R.

En phase 200, l'actionneur est activé. L'actionneur est en mouvement ou tourne (phase référencée MT1), et est arrêté (phase 300) lorsque ladite récupération est réalisée. En phase référencée MS1, l'actionneur est gardé en prétention pour empêcher toute réversion du moteur et perdre la prétention réalisée.

On commence alors la mesure proprement dite référencée M.

En phase 400, on alimente les actionneurs de réglage du siège par le profil de puissance PA et, comme indiqué ci-dessus, commence la variation du rapport cyclique, appelée également mesure PWM (« Pulse Width Modulation » ou Modulation de largeur d'Impulsion). Dès que l'actionneur entre en mouvement (phase référencée MT2), l'actionneur est arrêté (phase 500) et on mémorise simultanément (phase 550) la valeur du rapport cyclique au moment du démarrage de l'actionneur. Cette valeur de $R_{CYC}$ est appelée $R_{CYC}$ (Dem) et est envoyée (en phase 600) au calculateur pour être comparée aux seuils de classification d'occupants de la figure 4.

A titre d'exemple, comme on peut le voir sur le dessin de la figure 4, si $R_{CYC}$ (Dem) = n sur l'axe des ordonnées du graphe, cette valeur correspond à une valeur d'approximativement 18 sur l'axe des abscisses, et par conséquent au cas d'un occupant du siège de masse comprise entre 5 et 37 kg, donc un enfant dans un dispositif de retenue pour enfant ou un rehausseur.

Pendant la phase dite de mesure proprement dite M, les commandes de réglage du siège sont inhibées afin de ne pas perturber les résultats.

Sur la figure 6, est représenté l'algorithme de la mesure elle-même. Une demande nouvelle de mesure est symbolisée par D. En phase 400, est initiée l'application du profil de puissance et le compteur d'impulsions démarre. Le moment du démarrage de l'actionneur est représenté par $D_M$. Au moment de la phase d'arrêt de l'actionneur, référencée 500 et à fin de mémorisation, référencée 550, de la valeur du rapport cyclique correspondant $R_{CYC}$ (Dem), le compteur est stoppé sur cette valeur et la puissance est remise à une certaine valeur permettant de garder en prétention l'actionneur. L'actionneur est ensuite dans l'état arrêté (phase référencée MS2), puis est effectué la comparaison de $R_{CYC}$ (Dem) avec les seuils de la figure 4.

Comme indiqué précédemment, pour réaliser une détection et une classification précise et fiable, il est nécessaire que tous les jeux mécaniques du siège soient rattrapés avant d'effectuer la mesure proprement dite. Dès que l'on détecte la rotation de l'actionneur, on arrête ce dernier afin de na pas altérer le confort du passager. Les actionneurs de siège électriques ont une vitesse nominale d'environ 3000 tours par minute. Si on détecte la rotation de l'actionneur en 1 tour complet (maximum), et que la mesure nécessite 2 tours, soit 1 pour le rattrapage des jeux et 1 pour la détection), la durée durant laquelle l'actionneur est activé est de l'ordre de (60/3000) x 2 = 0,04 secondes, ce qui rend le déplacement du siège quasiment imperceptible par le passager. Si l'on veut diminuer le temps de la mesure, il est possible de détecter le mouvement de l'actionneur en analysant le courant. De cette façon, il n'est pas nécessaire que l'actionneur atteigne la position d'un capteur pour détecter son mouvement.

On notera que la mesure ainsi décrite est effectuée de manière contrôlée selon les besoins en terme de détection/classification. Cette mesure peut être effectuée de manière périodique ou évènementielle. On a, de cette manière, réalisé un système qui est utile et s'adapte à toute stratégie de détection ainsi qu'à tout type d'actionneur de déplacement. Il suffit dans chaque cas de modifier les seuils de détection et classification dans l'algorithme.

On notera également que, dans le but de s'affranchir des éventuels effets de bord du siège et ne pas réaliser de mesures lorsque le siège est en butée, il est nécessaire de définir des butées logicielles avant les butées mécaniques du siège. De cette façon, on s'assure que toutes les mesures sont effectuées dans des conditions identiques quelle que soit la position initiale du siège.

On notera également que, parmi les nombreux paramètres qui interviennent sur les seuils de décrochement des actionneurs, les principaux sont la tension de la batterie, la température, le vieillissement de l'actionneur et de la tringlerie du siège. Il est, en conséquence, utile de contrôler ces paramètres et d'effectuer des phases d'auto calibration sur toute la durée de vie du dispositif.

Le dispositif pour la mise en oeuvre du procédé selon l'invention comprend :

- un moyen pour appliquer à l'actionneur de déplacement du siège 1 un profil de puissance PA préalablement défini, et représenté sur la figure 2,

- un moyen de détection du démarrage $D_M$ dudit actionneur de siège sous l'action de ce profil de puissance,

- un moyen de mesure à chaque instant de la valeur de ladite caractéristique variable de puissance, qui est dans le présent mode préféré de réalisation de l'invention, le rapport cyclique $R_{CYC}$ de la tension de commande hachée.

- un moyen de comparaison de ladite valeur de $R_{CYC}$ mesurée au moment du démarrage $R_{CYC}$ (Dem) de l'actionneur avec une série de valeurs de référence prédéterminées de $R_{CYC}$ en fonction de la masse, comme on peut les voir sur le graphe de la figure 4, afin de déterminer la présence d'un occupant (ou d'un objet) sur le siège et de détecter et/ou classifier ledit occupant (ou ledit objet) selon sa masse.

Le moyen pour appliquer à l'actionneur de déplacement du siège un profil de puissance préalablement défini est un moyen de génération d'une tension hachée à rapport cyclique variable.

Ce profil de puissance est défini par un calculateur électronique embarqué sur le véhicule. Ce calculateur est également le moyen de détection du démarrage $D_M$ de l'actionneur de siège.

Le même calculateur électronique est le moyen de comparaison de $R_{CYC}$ (Dem) avec une série de valeurs de référence prédéterminées de $R_{CYC}$ en fonction de la masse.

Le procédé et le dispositif décrits précédemment apportent de réels avantages aux véhicules équipés de sièges électriques. Ces derniers ont besoin de peu de modifications matériel et logiciel, parce qu'il est possible d'utiliser les calculateurs actuels pour commander les actionneurs de siège et effectuer la détection/classification d'occupants.

Les seuils de détection et de classification étant, comme mentionné précédemment, ajustés au niveau du logiciel, aucune intervention extérieure n'est requise, et ce même en phase de production.

L'ajustement des seuils de détection permet d'adapter les différentes stratégies au niveau de l'airbag en fonction des conditions d'utilisation :

- activation/ inhibition

- activation/ déploiement faible risque

- activation/ déploiement faible risque/ inhibition.

Cette mesure est également fournie à tout dispositif où l'information masse de l'occupant présent est utile (ajustement confort, climatisation, etc.).

## Revendications

1. Procédé de détection et de classification d'occupant d'un siège

   (1) de véhicule, lequel siège (1) présente au moins un réglage de déplacement (m1, m2) commandé par au moins un actionneur de déplacement, **caractérisé en ce qu'**il comporte les étapes suivantes :

   - a) on commande (400) ledit actionneur permettant le déplacement dudit siège en augmentant progressivement dans le temps la puissance fournie (PA) audit actionneur selon un profil prédéterminé,
   - b) on détecte le démarrage ($D_M$) du mouvement de l'actionneur de déplacement, et à cet instant on relève la valeur atteinte par ladite puissance,
   - c) on compare ladite valeur de puissance relevée à une série de valeurs de référence prédéterminées, afin de déterminer la présence d'un occupant du siège (1) et de le classifier selon sa masse.

2. Procédé selon la revendication 1, **caractérisé en ce que** ladite augmentation est réalisée par un moyen de contrôle de puissance.

3. Procédé selon la revendication 1, **caractérisé en ce que** ladite augmentation est opérée selon un profil linéaire.

4. Procédé selon la revendication 1, **caractérisé en ce que** ladite augmentation évolue selon un profil adapté tenant compte de mesure(s) antérieure(s).

5. Procédé selon l'une quelconque des revendications 1 à 4, **caractérisé en ce que**, préalablement aux étapes a) à c) dudit procédé, il est effectué une action suffisante (200, 300) pour rattraper les jeux mécaniques du siège.

6. Procédé selon l'une quelconque des revendications 1 à 4, **caractérisé en ce que**, préalablement aux étapes a) à c) dudit procédé, il est effectué une action permettant de ne pas prendre en compte les jeux mécaniques dans la mesure.

7. Procédé selon l'une quelconque des revendications 1 à 6, **caractérisé en ce qu'**il est répété de manière périodique et/ou évènementielle dans le but de connaître à chaque instant l'existence d'un occupant et sa classification.

8. Procédé selon l'une quelconque des revendications 1 à 7, **caractérisé en ce qu'**il est, de plus, après l'étape c), effectué une action inverse dudit actionneur afin d'annuler les modifications de réglage dudit siège (1).

9. Procédé selon l'une quelconque des revendications 1 à 8, **caractérisé en ce que** ledit réglage de déplacement commandé par au moins un actionneur de déplacement est un réglage de déplacement en translation du siège (1).

10. Procédé selon l'une quelconque des revendications 1 à 8, **caractérisé en ce que** ledit réglage de déplacement commandé par au moins un actionneur de déplacement est un réglage de déplacement en révolution du siège (1).

11. Procédé selon l'une quelconque des revendications 1 à 8, **caractérisé en ce que** ledit réglage de déplacement commandé par au moins un actionneur de déplacement est un réglage de déplacement du siège (1) qui est composé d'un déplacement en translation du siège (1) et d'un déplacement en révolution du siège (1).

12. Procédé selon l'une quelconque des revendications 1 à 9, **caractérisé en ce que** les étapes a) à c) sont réalisées lorsque aucune commande du siège n'est activée, de manière à ne pas perturber la mesure et laisser à l'occupant la priorité d'utilisation.

13. Procédé selon l'une quelconque des revendications 1 à 12, **caractérisé en ce qu'**il s'applique à la détection et à la classification selon sa masse d'un objet sur ledit siège (1) de véhicule.

**14.** Dispositif de détection et de classification d'occupant ou d'objet sur un siège de véhicule, lequel siège présente au moins un réglage de déplacement commandé par au moins un actionneur de déplacement, **caractérisé en ce qu'**il comprend :

    - a) un moyen pour appliquer audit actionneur de déplacement dudit siège un profil de puissance (PA) préalablement défini, ladite puissance présentant au moins une caractéristique ($R_{CYC}$) représentative de l'effort appliqué sur l'actionneur.
    - b) un moyen de détection du mouvement ($D_M$) dudit actionneur de siège,
    - c) un moyen de comparaison de ladite valeur de la puissance définie au moment du mouvement dudit actionneur ($R_{CYC}$ (Dem)) avec une série de valeurs de référence prédéterminées de ladite puissance, afin de déterminer la présence d'un occupant (ou d'un objet) sur le siège (1) et de le classifier selon sa masse.

**15.** Dispositif selon la revendication 14, **caractérisé en ce que** ledit moyen pour appliquer audit actionneur de déplacement dudit siège un profil de puissance préalablement défini est un moyen de contrôle de la puissance fournie audit actionneur.

**16.** Dispositif selon la revendication 14, **caractérisé en ce que** ledit moyen pour appliquer audit actionneur de déplacement dudit siège

    (1) un profil de puissance (PA) préalablement défini est un calculateur embarqué sur le véhicule.

**17.** Dispositif selon la revendication 16, **caractérisé en ce que**, de plus, ledit calculateur est le moyen de détection du mouvement ($D_M$) dudit actionneur de siège (1).

**18.** Dispositif selon l'une quelconque des revendications 16 ou 17, **caractérisé en ce que**, de plus, ledit calculateur est le moyen de comparaison de ladite valeur de la caractéristique mesurée au moment du démarrage dudit actionneur ($R_{CYC}$ (Dem)) avec une série de valeurs de référence prédéterminées de ladite caractéristique.

**FIG.1**

**FIG.2**

**FIG.3**

**FIG.4**

**FIG.5**

**FIG.6**

Office européen
des brevets

**RAPPORT DE RECHERCHE EUROPEENNE**

Numéro de la demande

EP 06 30 0080

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 6 254 126 B1 (BAUER HANS-PETER ET AL) 3 juillet 2001 (2001-07-03) * colonne 1, ligne 33 - colonne 2, ligne 36; revendications; figures * ----- | 1-18 | INV. B60R21/015 |
| X | DE 198 52 541 C1 (BROSE FAHRZEUGTEILE GMBH & CO KG) 23 mars 2000 (2000-03-23) * colonne 2, ligne 21 - colonne 5, ligne 32; revendications; figures * ----- | 1-18 | |
| X | FR 2 802 634 A (BERTRAND FAURE EQUIPEMENTS SA) 22 juin 2001 (2001-06-22) * page 1, ligne 4 - page 5, ligne 6; revendications; figures * ----- | 1,14 | |
| D,A | WO 98/41424 A (SOUTHWEST RESEARCH INSTITUTE) 24 septembre 1998 (1998-09-24) * page 2, ligne 2 - page 3, ligne 21; figures * ----- | 1,14 | |

**DOMAINES TECHNIQUES RECHERCHES (IPC)**

B60R

Le présent rapport a été établi pour toutes les revendications

| Lieu de la recherche | Date d'achèvement de la recherche | Examinateur |
|---|---|---|
| La Haye | 13 juin 2006 | Daehnhardt, A |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 30 0080

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-06-2006

| Document brevet cité au rapport de recherche | | Date de publication | Membre(s) de la famille de brevet(s) | | Date de publication |
|---|---|---|---|---|---|
| US 6254126 | B1 | 03-07-2001 | WO | 9908078 A1 | 18-02-1999 |
| | | | DE | 19734508 A1 | 25-02-1999 |
| | | | EP | 1000327 A1 | 17-05-2000 |
| | | | JP | 3245148 B2 | 07-01-2002 |
| | | | JP | 2001512820 T | 28-08-2001 |
| DE 19852541 | C1 | 23-03-2000 | EP | 0999091 A1 | 10-05-2000 |
| FR 2802634 | A | 22-06-2001 | AUCUN | | |
| WO 9841424 | A | 24-09-1998 | AU | 6466298 A | 12-10-1998 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9841424 A